# EUROPÄISCHE PATENTSCHRIFT

(11) **EP 0 573 951 B1**
(45) Veröffentlichungstag und Bekanntmachung des Hinweises auf die Patenterteilung: **22.11.1995**
(21) Anmeldenummer: 93109170.6
(22) Anmeldetag: 08.06.1993
(51) Int. Cl.: A01G 23/04

(54) **Balliergewebe**
Packing fabric
Tissu d'emballage

(30) Priorität: 10.06.1992 DE 9207737 U
(43) Veröffentlichungstag der Anmeldung: 15.12.1993
(73) Patentinhaber: REIMANN SPINNEREI UND WEBEREI GMBH, 48282 Emsdetten (DE)
(72) Erfinder: Reimann, Monika, W-4407 Emsdetten (DE)
(74) Vertreter: Meldau, Gustav, Dipl.-Ing.

(56) Entgegenhaltungen:
- DE-A- 1 908 392
- DE-A- 2 813 059
- US-A- 5 033 231

## Beschreibung

Für die Umhüllung der Wurzelballen von Bäumen und Büschen beim Verpflanzen ist es bekannt, ein Balliergewebe zu verwenden. Derartige bekannte Balliergewebe bestehen aus Fäden aus Jutefasern in der Kette und im Schuß und sie haben eine verhältnismäßig große Maschenweite. Die Maschenweite liegt in der Größenordnung von 3 bis 6 mm.

Seit den 60er Jahren verwendet man auch ein Gewebe, bei dem in der Kette Fäden aus synthetischen Fasern vorgesehen sind, und zwar vorzugsweise bei Ballierungen, die über eine Wachstumsperiode im Einschlag bleiben. Insbesondere die Acryl-Faser-Produktion in der Industrie war zu jener Zeit so weit angestiegen, daß kostengünstig Abfälle bzw. Fasern minderer Qualität zur Verfügung standen und für die Verwendung in Balliergeweben gewisse Vorteile boten.

Die Verwendung von synthetischen Fasern im Balliergewebe hatte zunächst den Zweck, das Gewebe wirtschaftlicher erzeugen zu können, da es sich bei den synthetischen Fasern um einen Abfall aus der Industrie handelte und Fäden, die unter Verwendung von solchen Abfallfasern hergestellt wurden, wesentlich kostengünstiger waren, als Fäden die aus reiner Jute bestanden. Weiterhin war ein derart hergestelltes Gewebe aufgrund des Anteils an Synthetikfasern etwas geschmeidiger und ließ sich leichter hantieren und verarbeiten, denn Gewebe aus Fäden unter Verwendung reiner Jute sind verhältnismäßig steif. Insbesondere gab es bei der Verwendung von Balliergewebe aus reiner Jute Schwierigkeiten beim Verknoten der Ecken bzw. Zipfel oberhalb des Ballens am Stamm der Pflanze. Solche Knoten lösten sich leicht auf, aufgrund der Steifigkeit der Jutefasern.

Es wurden dann Ballierungsgewebe hergestellt und verwendet, bei denen in der Kette im Wechsel 2:1 oder 3:1 Fäden aus Acryl-Fasern und Jute angeordnet waren, und im Schuß wurden ausschließlich Fäden aus Acryl-Fasern eingebracht.

Eine besondere Ausführung eines solchen Balliergewebes hatte ein erstes Fadensystem mit Fäden, die etwa zur einen Hälfte natürlicher Provenienz sind und zur anderen Hälfte aus Kunststoff bestehen, Während ein zweites Fadensystem aus vergleichsweise dünneren Fäden aufgebaut ist, die in Schlaufen um die zu ihnen rechtwinklig verlaufenden Fäden des ersten Fadensystems geschlungen sind und in dem ein- oder beidseitig aufgerauhten Gewebe die Richtung der grösseren Festigkeit markieren, dabei soll insbesondere das aus dickeren Fäden bestehende erste Fadensystem die Schussfäden eines Gewebes bilden, in dem die Fäden des anderen Systems als gewirkte Ketten angeordnet sind (DE-A-2 813 059).

Derartige Ballierungsgewebe waren recht lange haltbar. Selbst wenn die Jutefäden verrottet waren, was nach einigen Monaten der Fall ist, hielten die Gewebe nach einer Wachstumsperiode im Einschlag noch immer so gut zusammen, daß ein Umpflanzen bzw. eine Versetzung der Pflanzen mit intaktem und zusammengehaltenem Wurzelballen keine Schwierigkeiten bereitete. Allerdings wurde beobachtet, daß die Ausbreitung der Wurzeln, insbesondere auch der feineren Wurzeln aus dem durch das Balliergewebe umhüllten Wurzelballen heraus behindert war, so daß ein normales Wachstum der Pflanze bei Verwendung derartiger Ballierungsgewebe zumindest teilweise nicht unerheblich retardiert war.

Darüber hinaus hat das speziell beschriebene Gewebe nach dem vorveröffentlichten Stand der Technik sehr unterschiedliche Fadenstärken und unterschiedliche Festigkeiten in den verschiedenen Fadenrichtungen, abgesehen davon, daß die Maschenweiten, schon durch die erheblich unterschiedlichen Fadenstärken in den verschiedenen Richtungen bedingt, ebenfalls sehr unterschiedlich sind.

Da Fäden aus Jutefasern verhältnismäßig hart und spröde sind, während Fäden aus Acryl-Fasern sehr weich und "labberig" sind, bewirkt eine umfangreiche Verwendung von Fäden aus Acryl-Fasern, daß derartige Ballierungsgewebe nur noch schlecht zu handhaben sind.

Weiterhin ist ein Gewebe bekannt, das auf einem Erdbodenhang zu verwenden ist, um dort das Wachsen der Vegetation zu begünstigen. Dieses bekannte Gewebe besteht im Schuss aus Bändchen, die durch Kettfäden derart eingebunden sind, daß die Abstände zwischen den Bändchen geringer sind, als die Breite der Bändchen, wobei der Abstand der Kettfäden unterschiedlich und sehr viel grösser ist als die Breite der Bändchen. Die Bändchen sind damit derart eingebunden, daß sie Vor- und Rücksprünge bilden, um eine Erosion des Bodens, auf dem sie aufliegen, zu verhindern oder gering zu halten, das heisst, bei dem Gegenstand nach dieser Vorveröffentlichung kommt es im wesentlichen darauf an, daß die Auflage des Gewebes auf dem Untergrund eine derartige geometrische Form aufweist, daß sie sich im Untergrund verankert und die Oberfläche derart unregelmässig ist, daß ein Abschwemmen der Erde von der geneigten Fläche des Hanges vermieden wird. Die Bändchen sollen aus einem Material bestehen, das verrottbar ist, während die, die Kette bildenden Fäden aus einem Material bestehen sollen, das nicht verrottbar ist. Durch das Verrotten der Bändchen, die ausschließlich im Schuss des Gewebes angeordnet sind, soll dem Boden einerseits Nährstoff zugeführt werden, andererseits wird damit Platz geschaffen für die Vegetation, die in Form von Samen mit dem Gewebe aufgebracht ist und im wesentlichen aus Gras besteht. Ein Aufnehmen des Gewebes ist nicht vorgesehen, vielmehr ist es besonders wichtig, daß das Gewebe an als Oberflächenbedeckung solange wie möglich liegenbleibt, um die anwachsende Vegetation zu halten und zusätzlich zu Verfestigen und Erosion an der Oberfläche durch fliessendes Regenwasser wirksam zu verhindern. Die Verwendung eines solchen bekannten Gewebes für das Einschlagen der Wurzelballen von Bäumen und Sträuchern beim Verpflanzen, insbesondere mit der Vorgabe, daß nach einer oder zwei Wachstumsperioden ein Umpflanzen erfolgen kann und der Ballen dann noch ausreichend von dem so ausgebildeten Balliergewebe gehalten wird, ist nicht möglich, weil das Gewebe nach dem Verrotten der Bändchen im Schuss viel zu weite Maschen haben würde. Im Übrigen ist aus diesem Grunde dieses bekannte Gewebe auch nicht geeignet, über dem Wurzelballen mit seinen Zipfelecken gebunden zu werden, es behindert ein erwünschtes gleichmässiges Wachsen des Wurzelballens und würde bei einem späteren Umpflanzen zerfallen, weil es in Schuss- und Kettrichtung äußerst unterschiedliche Festigkeit aufweist.

In der ersten Hälfte der 80er Jahre wurde ein Ballierungsgewebe nach entsprechenden Versuchen aus Fäden hergestellt, die teilweise aus Mischgarn bestanden, und zwar zu 60 bis 70% aus Synthetik-Fasern und zu 30 bis 40% aus verrottbaren Jutefasern. Diese Fäden aus Mischgarn wurden im Wechsel mit Fäden, die nur aus Jutefasern oder aus Acrylfasern bestanden, verwendet, wobei Mischgarn ausschließlich im Schuß eingebracht wurde. Der verrottbare Anteil solcher Gewebe konnte bis auf höchstens ca. 60% gebracht werden, wobei Schwierigkeiten und Unsicherheiten insbesondere bei der Herstellung von Fäden aus Mischgarn bestehen: Die erwünschte Fasermischung in solchen Fäden lässt sich aus verschiedenen Gründen nur sehr schwer einhalten - sie schwankt in weiten Grenzen. Wenn der verrottende Anteil der Fasern eines Fadens, der aus einer Fasermischung gesponnen ist, stark unterschiedlich ist, lassen sich keine Voraussagen über den Zusammenhalt des Fadens machen, d.h. jedoch, daß damit gerechnet werden muß, daß ein hoher Anteil von Ballierungsgeweben schon während einer Wachstumsperiode zerfällt und den Wurzelballen nicht mehr in der für das Verpflanzen oder Versetzen erwünschten Weise zusammenhält, Darüberhinaus verbleiben insbesondere die Anteile des Ballierungsgewebes an synthetischen Fäden und Fasern im Boden, da sie nicht verrotten. Das ist äußerst unerwünscht, denn es entstehen dadurch insbesondere in intensiv bearbeiteten Böden von Baumschulen und Gärtnereien erhebliche Probleme.

Aufgrund der Schwierigkeit, daß insbesondere bei Mischgewebe die Anteile natürlicher und synthetischer Fasern im Faden nicht genau eingehalten oder dosiert werden können, kann es im Gewebe zu unerwünscht hohen Anteilen an Synthesefasern kommen. Allgemein besteht die Tendenz bzw. das Bestreben, insbesondere auch auf dem Gärtnereisektor, Kunststoffe in so geringem Maß wie nur irgendmöglich zu verwenden und insbesondere auch zu vermeiden, daß Kunststoffe - hier Synthesefasern - in den Boden kommen und dort verbleiben. Es entstehen dadurch unerwünschte oder gar schädliche Wirkungen, beispielsweise wird durch im Boden enthaltene Kunststoff-Fasern der Einsatz von Grab- und Kultivationswerkzeugen behindert oder gar - bei größerem Vorkommen - annähernd unmöglich.

Die Erfindung hat sich die Aufgabe gestellt, ein Ballierungsgewebe zu optimieren, wobei zwei, einander teilweise entgegengesetzte Gesichtspunkte zu beachten sind:
Es soll so wenig Kunststoff - in Form von synthetischen Fasern - wie möglich enthalten sein, da dieser im Boden nachteilig und unerwünscht ist - letztlich eine Umweltbelastung darstellt; es soll ausreichend Kunststoff - in Form von Synthetik-Fasern - in dem Gewebe in solcher Verteilung und Anordnung vorhanden sein, daß das Ballierungsgewebe auch nach einer Wa chstumsperiode noch den Wurzelballen der Pflanze zusammenhält; andererseits das Wurzelwachstum jedoch so gering wie nur möglich beeinträchtigt.

Zur Lösung dieser Aufgabe ist ein Balliergewebe für die Umhüllung der Wurzelballen von Bäumen und Büschen beim Verpflanzen, bestehend aus einem weitmaschigen Gewebe, bei dem die Fäden aus natürlich (vorzugsweise Jute) und synthetischen (vorzugsweise Acryl)-Fasern bestehen, dadurch gekennzeichnet, daß Fäden, die aus natürlichen Fasern bestehen und Fäden, die aus synthetischen Fasern bestehen, derart alternierend in Kette und Schuss in das Gewebe eingebunden sind, so daß nach Wegfall der Fäden aus natürlichen Fasern, z.B. durch Verrotten, das Gewebe - wenn auch mit größerer als der ursprünglichen Maschenweite - in seinem Zusammenhang erhalten bleibt.

Da Fäden, die aus synthetischen Fasern gesponnen sind, schon bei verhältnismäßig geringem Fasereinsatz aufgrund der Eigenschaften der verwendeten Fasern und aufgrund dessen, daß solche Fäden wesentlich höher gedreht werden können und damit eine erheblich größere Festigkeit gegenüber Jutefasern erreichen, ergibt sich, daß die verwendeten Fäden aus Synthese-Fasern ein wesentlich geringeres Metergewicht bzw. Volumen haben als die verwendeten Fäden aus natürlichen bzw. Jutefasern. Das Ballierungsgewebe nach der Neuerung hält den Ballen bei der ersten Ballierung gut zusammen, d.h. es kann kein Erde oder Sand herausfallen oder herausrieseln (besonders auf dem Transport bei vorübergehender Austrocknung), und der Ballen wird auch gegen mechanische Einwirkungen geschützt - also dicht und fest von dem Ballierungsgewebe umgeben. Da in dem Gewebe nach der Erneuerung ausreichend große Anteile von verrotbarem Material in Fäden derart angeordnet sind, daß nach dem Verrotten, was erfahrungsgemäß nach etwa drei Monaten erfolgt ist, noch ein Zusammenhalt des Gewebes vorhanden ist, also nach einer Wachstumsperiode noch der Ballen, wenn auch in lockerer Form zusammengehalten wird, ist einerseits ein Wurzelwachstum während der Wachstumsperiode, wenn überhaupt dann allenfalls nur geringfügig behindert, weil aufgrund des Verrottens eines großen Anteils der Fäden die Maschenweite des Gewebes erheblich größer wird und damit die Wurzeln an ihrer Ausdehnung über die Grenzen des ursprünglichen Ballens hinaus nicht behindert werden. Andererseits bilden die weiter gewachsenen Wurzeln zusammen mit dem nach dem Verrotten weitmaschigeren Gewebe einen derart festen und gut zusammenhaltenden Wurzelballen, daß dieser bei einem Verpflanzen nach der ersten Wachstumsperiode und gegebenenfalls auch noch später ein guter Zusammenhalt gegeben ist.

Obwohl ein geringerer Anteil an Synthetik-Fasern im Gewebe vorhanden ist, besteht die Sicherheit, daß das verbleibende Gewebe nach dem Verrotten der Jute dem Wurzelballen einen sicheren Halt gibt bei guter Durchwurzelmöglichkeit für die Pflanze. Rein synthetische Fäden lassen sich einfacher herstellen und damit auch der Anteil an synthetischen Fasern wesentlich besser dosieren bzw. einstellen als das beispielsweise bei einem Mischfaden der Fall ist, so daß es gelungen ist, den Anteil an natürlichen Fasern in Ballierungsgeweben nach der Neuerung von bisher 60% auf 75 bis 80% zu steigern und trotzdem einen besseren Zusammenhalt des Ballens nach mehr als einer Wachstumsperiode zu erreichen.

Eine vorteilhafte Ausführungsform eines Balliergewebes nach der Erfindung besteht darin, daß die Fäden aus natürlichen und synthetischen Fasern im Gewebe in der Kette 2 Synthetik/2 Jute und im Schuß 2 Synthetik/2 Jute eingebunden sind.

Es ist dies die optimale Form eines Balliergewebes nach der Erfindung, denn nach dem Verrotten der Fäden, die aus reinen Jutefasern bestehen, weist das Gewebe eine größere Maschenweite auf, wobei die großen Maschenabstände jedoch jeweils an allen Seiten von zwei miteinander eingebundenen Acryl-Faser-Fäden begrenzt sind, die sich ihrerseits in der alten Maschenweise kreuzen. Das Gewebe ist nach wie vor fest, und sämtliche Fäden sind sicher in das Gewebe eingebunden, so daß keine Fäden herausfallen können. Bei einem späteren Verpflanzen besteht allenfalls die Möglichkeit, daß im Gewebe Fäden sich gegeneinander verschieben, so daß die durch das Verrotten der Jutefäden entstandenen übergroßen Maschen in ihrer Weite verringert werden.

Weitere Möglichkeiten der Bindung bzw. der Anordnung von aus synthetischen Fasern einerseits und Jutefasern andererseits bestehenden Fäden in dem Gewebe bestehen in den folgenden alternativen Einbindungen:

| | **Kette:** | **Schuß:** |
|---|---|---|
| A) | 3 Synthetik/2 Jute | 2 Synthetik/2 Jute |
| B) | 3 Synthetik/2 Jute | 3 Synthetik/2 Jute |
| C) | 2 Synthetik/1 Jute | 2 Synthetik/2 Jute |
| D) | 2 Synthetik/1 Jute | 2 Synthetik/1 Jute |

Diese alternativen Einbindungsmöglichkeiten der Synthetik- und Jutefäden ergeben Ballierungsgewebe, die sich in ihren wesentlichen Eigenschaften in annähernd gleicher Weise verhalten wie das an erster Stelle genannte Ballierungsgewebe, das sowohl in Kette als auch im Schußs aus je 2 Synthetik/2 Jutefäden besteht - lediglich die Maschenweiten nach dem Verrotten der Jutefasern variieren bei den vorstehend tabellarisch angegebenen Geweben sowie auch der Gesamtanteil von Synthetik im Gewebe.

Nach einer vorteilhaften Weiterbildung können den Fäden, die aus synthetischen Fasern bestehen, ein geringer Anteil Jutefasern beigemischt sein, lediglich um ihre Steifigkeit bei der ersten Handhabung zu verbessern.

Die Beimischung von Jutefasern zu Synthetikfasern beim Verspinnen der Fäden in einem verhältnismäßig sehr geringen Anteil der beschriebenen Weise ist problemlos, denn es handelt sich ja lediglich um einen sehr geringen Anteil von beigemischten Jutefasern, wobei es unwesentlich ist, wenn dieser Anteil während der Beimischung auch einmal gegen Null geht, denn es wird dadurch eine nur sekundär erwünschte Eigenschaft stellenweise verringert.

Vorteilhaft ist am Rand des Gewebes ein höherer Anteil von Jutefäden in der Kette angeordnet, um die Handhabung insbesondere beim Anziehen der Zipfel und Verknoten während der ersten Ballierung zu verbessern.

Ein Ballierungsgewebe nach der Erfindung wird anhand der anliegenden Zeichnungen nachstehend näher erläutert. In den Zeichnungen zeigen:
- Figur 1:: ein Ballierungsgewebe in gebrauchsfertiger Form;
- Figur 2:: ein Ballierungsgewebe entsprechend Figur 1 nach dem Verrotten der aus Jutefasern bestehenden Fäden.

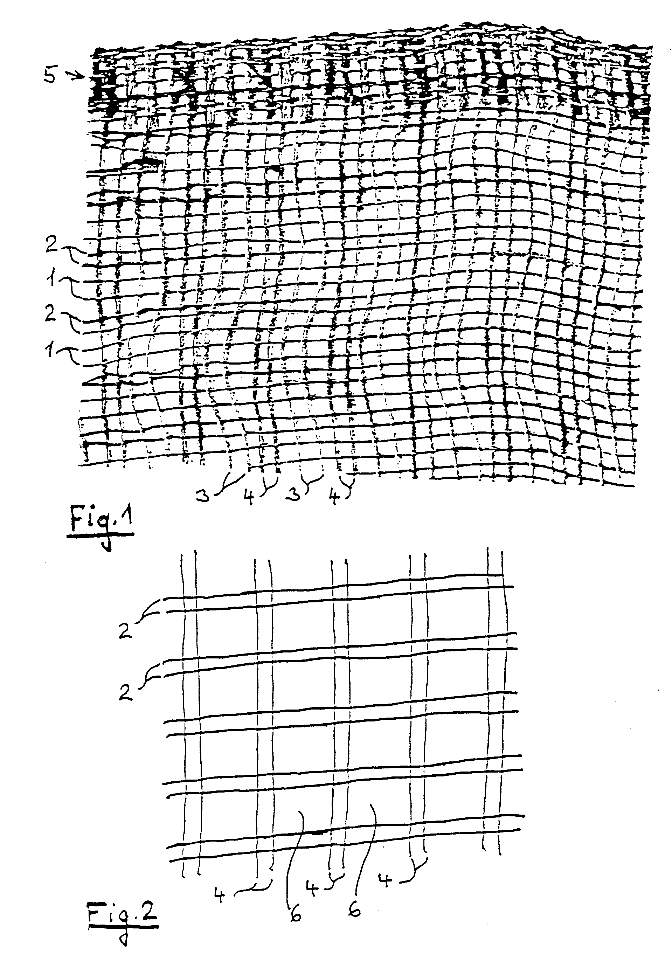

Bei dem in Figur 1 wiedergegebenen Ausführungsbeispiel sind in der Kette die heller erscheinenden, aus Jutefasern gesponnen Fäden 1 und die dunkler erscheinenden, aus Acryl-Fasern gesponnen Fäden 2 im Verhältnis 2:2 jeweils nebeneinander angeordnet. Ein Paar Jutefäden wechselt jeweils mit einem Paar Acrylfäden ab. In gleicher Weise sind im Schuss die heller erscheinenden Jutefäden 3 jeweils mit den dunkler erscheinenden Acrylfäden 4 abwechselnd paarweise eingebracht. Im Randbereich 5 sind Jutefäden in etwas dichterer Lage angeordnet, um diesen Bereich steifer zu halten und damit das Gesamtgewebe formbeständiger auszubilden.

Wenn ein derartiges Ballierungsgewebe nach Figur 1 zur Umhüllung eines Pflanzenballens eine Zeitlang im Erdreich gelagert ist, in Abhängigkeit von Bodenbeschaffenheit und Feuchtigkeit und erfahrungsgemäß im mittleren Durchschnitt etwa nach drei Monaten, sind die aus Jutefasern bestehenden Fäden 1 in der Kette und 3 im Schuss weitgehend verrottet, und es verbleibt ein Gewebe, das das Aussehen nach Figur 2 hat und das ausschließlich nur noch aus zusammenhaltenden Fäden aus Acrylfasern in der Kette 2 und im Schuß 4 besteht und das erkennbar zwischen den einzelnen Fadenpaaren größere Abstände bzw. Maschenweiten aufweist, damit den Wurzeln des Ballens bessere Wachstumsmöglichkeiten bietet und den Ballen beim Umpflanzen jedoch noch sehr ausreichend zusammenhält.

## Patentansprüche

1. Balliergewebe für die Umhüllung von Wurzelballen von Bäumen und Büschen beim Verpflanzen, bestehend aus einem weitmaschigen Gewebe mit Maschenweiten im Bereich von 3 - 10 mm, bei dem die Fäden aus natürlichen und synthetischen Fasern bestehen, **dadurch gekennzeichnet**, daß Fäden, die aus natürlichen Fasern bestehen, und Fäden, die aus synthetischen Fasern bestehen, derart alternierend in Kette und Schuss in das Gewebe eingebunden sind, daß nach Wegfall der Fäden (1, 3) aus natürlichen Fasern, z.B. durch Verrotten, das Gewebe, wenn auch mit größerer als der ursprünglichen Maschenweite, erhalten bleibt.

2. Balliergewebe nach Anspruch 1, **dadurch gekennzeichnet**, daß die Fäden aus natürlichen Fasern (1,3) aus Jute und die Fäden aus synthetischen Fasern (2,4) aus Acryl bestehen.

3. Balliergewebe nach Anspruch 1, **dadurch gekennzeichnet**, daß die Fäden (1 und 3) aus natürlichen und die Fäden (2 und 4) aus synthetischen Fasern im Gewebe in der Kette 2 synthetisch/2 Jute und im Schuß 2 synthetisch/2 Jute eingebunden sind.

4. Balliergewebe nach Anspruch 1, **dadurch gekennzeichnet**, daß die Fäden aus natürlichen und synthetischen Fasern im Gewebe in folgender Weise alternativ eingebunden sind:
| | **Kette:** | **Schuß:** |
|---|---|---|
| A) | 3 Synthetik/2 Jute | 2 Synthetik/2 Jute |
| B) | 3 Synthetik/2 Jute | 3 Synthetik/2 Jute |
| C) | 2 Synthetik/1 Jute | 2 Synthetik/2 Jute |
| D) | 2 Synthetik/1 Jute | 2 Synthetik/1 Jute |

5. Balliergewebe nach einem der vorstehenden Ansprüche, **dadurch gekennzeichnet**, daß den Fäden, die aus synthetischen Fasern bestehen, ein geringer Anteil von Jutefasern beigemischt ist, lediglich um ihre Steifigkeit bei der ersten Handhabung zu verbessern.

6. Balliergewebe nach einem der vorstehenden Ansprüche, **dadurch gekennzeichnet**, daß am Rand (5) des Gewebes ein höherer Anteil von Jutefäden in der Kette angeordnet ist, um die Handhabung zu verbessern.

## Claims

1. Baling fabric for enclosing root balls of trees and bushes when transplanting, consisting of a wide-mesh fabric with mesh widths in the range from 3-10 mm, in which the threads consist of natural and synthetic fibres, characterized in that threads which consist of natural fibres and threads which consist of synthetic fibres are alternately bound by warp and weft into the fabric in such a way that, after the threads (1, 3) consisting of natural fibres disappear, e.g. through rotting, the fabric is preserved, though with a mesh width greater than the original one.

2. Baling fabric according to Claim 1, characterized in that the threads consist of natural fibres (1, 3) made from jute and the threads of synthetic fibres (2, 4) from acrylic.

3. Baling fabric according to Claim 1, characterized in that the threads (1 and 3) made of natural fibres and the threads (2 and 4) made of synthetic fibres are bound into the fabric in the warp 2 synthetic/2 jute and in the weft 2 synthetic/2 jute.

4. Baling fabric according to Claim 1, characterized in that the threads made of natural and synthetic fibres are alternately bound into the fabric in the following manner:
| | **Warp:** | **Weft:** |
|---|---|---|
| A) | 3 synthetic/2 jute | 2 synthetic/2 jute |
| B) | 3 synthetic/2 jute | 3 synthetic/2 jute |
| C) | 2 synthetic/1 jute | 2 synthetic/2 jute |
| D) | 2 synthetic/1 jute | 2 synthetic/1 jute |

5. Baling fabric according to one of the preceding Claims, characterized in that a small proportion of jute fibres is mixed with the threads that consist of synthetic fibres for the sole purpose of improving their stiffness when first handled.

6. Baling fabric according to one of the preceding Claims, characterized in that a higher proportion of jute threads is arranged in the warp at the edge (5) of the fabric in order to improve handling.

## Revendications

1. Tissu d'emballage pour envelopper des mottes de racines d'arbres et d'arbustes lors de la transplantation, constitué par un tissu à larges mailles ayant une largeur de mailles dans l'intervalle de 3 à 10 mm, dans lequel les fils sont composés de fibres naturelles et synthétiques, caractérisé en ce que des fils qui sont composés de fibres naturelles et des fibres qui sont composés de fibres synthétiques sont entrelacés alternativement en chaîne et en trame dans le tissu, en ce que, après la disparition des fils (1, 3) en fibres naturelles, par exemple par pourrissement, le tissu reste conservé, bien qu'avec une largeur de mailles plus grande que la largeur de mailles d'origine.

2. Tissu d'emballage selon la revendication 1, caractérisé en ce que les fils de fibres naturelles (1, 3) sont en jute et les fils de fibres synthétiques (2, 4) sont en acrylique.

3. Tissu d'emballage selon la revendication 1, caractérisé en ce que les fils (1 et 3) de fibres naturelles et les fils (2 et 4) de fibres synthétiques sont entrelacés dans le tissu à raison de 2 synthétiques/2 jute en chaîne et de 2 synthétiques/2 jute en trame.

4. Tissu d'emballage selon la revendication 1, caractérisé en ce que les fils de fibres naturelles et de fibres synthétiques sont entrelacés alternativement dans le tissu de la façon suivante :
| | Chaîne | Trame |
|---|---|---|
| A) | 3 synthétiques/2 jute | 2 synthétiques/2 jute |
| B) | 3 synthétiques/2 jute | 3 synthétiques/2 jute |
| C) | 2 synthétiques/1 jute | 2 synthétiques/2 jute |
| D) | 2 synthétiques/1 jute | 2 synthétiques/1 jute |

5. Tissu d'emballage selon l'une des revendications précédentes, caractérisé en ce qu'on ajoute une petite proportion de fibres de jute aux fils qui sont composés de fibres synthétiques avec pour seul objectif d'améliorer leur raideur lors de la première manipulation.

6. Tissu d'emballage selon l'une des revendications précédentes, caractérisé en ce qu'au bord (5) du tissu, on incorpore une plus grande proportion de fils de jute dans la chaîne pour améliorer la manipulation.
